Europäisches Patentamt

European Patent Office

Office européen des brevets

(19)

(11) Publication number: **0 080 767**

**B1**

(12) **EUROPEAN PATENT SPECIFICATION**

(45) Date of publication of patent specification: **13.08.86**

(51) Int. Cl.⁴: **C 08 L 69/00,** C 08 L 55/02, C 08 L 51/04

(21) Application number: **82201483.3**

(22) Date of filing: **22.11.82**

(54) **Polymer composition.**

(30) Priority: **02.12.81 NL 8105437**

(43) Date of publication of application:
**08.06.83 Bulletin 83/23**

(45) Publication of the grant of the patent:
**13.08.86 Bulletin 86/33**

(84) Designated Contracting States:
**AT BE CH DE FR GB IT LI NL SE**

(56) References cited:
**EP-A-0 005 202**

(73) Proprietor: **STAMICARBON B.V.**
**Mijnweg 1**
**NL-6167 AC Geleen (NL)**

(72) Inventor: **van Bokhoven, Petrus H. M.**
**Steinhartstraat 9**
**NL-6174 RH Sweikhuizen (NL)**
Inventor: **van Asperen, Pieter J.**
**Boerhaavestraat 21**
**NL-6164 GP Geleen (NL)**

(74) Representative: **Hatzmann, Marinus Jan et al**
**OCTROOIBUREAU DSM P.O.Box 9**
**NL-6160 MA Geleen (NL)**

Courier Press, Leamington Spa, England.

# 0 080 767

**Description**

The invention relates to a polymer composition based on a polycarbonate and a graft copolymer of a vinyl aromatic compound and an unsaturated nitrile compound.

A polymer composition of this type is known from i.a. German Patents Nos. 1,170,141 and 1,810,993 and from open Dutch Patent Application Nos. 7316731 and 7316732, laid open to public inspection.

German Patent No. 1,170,141 describes mixtures of a polycarbonate and a polymer obtained by graft polymerization of a vinyl aromatic compound and an unsaturated nitrile compound in the presence of polybutadiene.

According to German Patent No. 1,810,993, the heat resistance, notch impact strength, and hardness of such mixtures can be improved by incorporating a copolymer that contains at least 50 wt-% of α-methylstyrene.

According to Dutch Patent Application No. 7316731, the fusion welds of mixtures in accordance with these patents can be strengthened by using a graft copolymer with 40—80 wt.-% of rubber, whilst the mean particle size of the graft copolymer is between 0.2 and 5 μm.

Dutch Patent Application No. 7316732 discloses that the same aim can be achieved by using a graft copolymer with a mean particle size between 0.05 and 0.19 μm.

In the not prepublished European Patent Application No. 51.336 a polymer composition based on a polycarbonate and a specific graft copolymer is described.

The European Patent Application No. 5202 describes a polymer composition based upon a polycarbonate, on ABS-type graft copolymer having a rubber content of 5—50 wt.%, a second ABS-type graft copolymer having a rubber content of 60—90 wt.% and a styrene acrylonitrile copolymer. The object of this application is to provide compositions which retain their impact resistance even at very low temperatures.

The aim of the invention is to provide a polymer composition of the type described above in which the flow behaviour is improved while the other mechanical properties such as impact strength and hardness are retained.

The invention is characterized by a polymer composition that contains:

A. one or more graft copolymers obtained by polymerizing 40—80 parts by weight of a monomer mixture consisting of:
    20—40 wt.-% of acrylonitrile
    60—80 wt.-% of styrene and
    0—20 wt.-% of one or more other monomers in the presence of 20—60 parts by weight of rubber,

B. one or more graft copolymers obtained by polymerizing 75—90 parts by weight of a monomer mixture consisting of:
    20—40 wt.-% of acrylonitrile
    60—80 wt.-% of styrene and
    0—20 wt.-% of one or more other monomers in the presence of 10—25 parts by weight of rubber,

C. a copolymer obtained by polymerizing 20—40 parts by weight of acrylonitrile and 60—80 parts by weight of styrene, and

D. one or more polycarbonates, the rubber content of the polymer composition being between 5 and 30 wt.-% and the difference between the rubber contents of the graft copolymers being at least 5 wt.%.

In this context the terms styrene and acrylonitrile are understood to include derivates of styrene and acrylonitrile, such as α-methylstyrene and methacrylonitrile.

Surprisingly, it has been found that in such a composition good flow properties are combined with good impact strength (even at low temperatures), hardness, stiffness, and energy absorbed in the falling dart test.

This is of particular importance for complicated products such as car components, for example dashboards and grilles. An extra advantage is that these polymer compositions do not give rise to any problems with regard to the strength of the fusion seams. As a result of the good flow behaviour the fusion seams have adequate strength and are totally or virtually invisible.

In principle, any thermoplastic polycarbonate is suitable for the mouldable masses of the invention. Polycarbonates in themselves are known and may be obtained for example by the reaction of dihydroxy or polyhydroxy compounds with phosgene or the diester of carbonic acid.

Dihydroxy compounds that are particularly suitable are dihydroxydiarylalkanes, including those compounds that contain alkyl groups or chlorine or bromine atoms in the ortho position with respect to the hydroxyl group.

The following compounds are preferred dihydroxydiarylalkanes: 4,4' - dihydroxy - 2,2 - diphenylpropane (bisphenol A), tetramethylbisphenol A, tetrachlorobisphenol A, tetrabromobisphenol A, and bis - (4 - hydroxyphenyl) - p - diisopropylbenzene. In addition to the polycarbonates that can be

2

prepared from dihydroxydiarylalkanes alone, branched polycarbonates may be used. To prepare polycarbonates of this type a proportion of the dihydroxy compound, for example 0.2—2 mol.%, is replaced by a polyhydroxy compound.

Examples of suitable polyhydroxy compounds are 1,4 - bis(4',4,2' - dihydroxytriphenyl-methyl)benzene, phloroglucinol, 4,6 - dimethyl - 2,4,6 - tri(4 - hydroxyphenyl) - 2 - heptene, 4,6 - dimethyl - 2,4,6 - tri(4 - hydroxyphenyl)heptane, 1,3,5 - tri(4 - hydroxyphenyl)benzene, 1,1,1 - tri(4 - hydroxyphenyl)ethane, and 2,2 - bis[4,4 - (4,4' - dihydroxydiphenyl)cyclohexyl]propane.

Polycarbonates of the said type are for example described in United States Patents Nos. 3,028,365, 2,999,835, 3,148,172, 3,271,368, 2,970,137, 2,991,273, 3,271,367, 3,280,078, 3,014,891 and 2,999,846.

If the polymer composition is required to have flame-retardant properties the polycarbonate component can advantageously consist in whole or in part of halogenated polycarbonate.

The graft copolymers can be obtained by polymerizing styrene and acrylonitrile in the presence of a rubber, preferably in emulsion.

Various known polymerization techniques are suitable for this purpose, such as emulsion, suspension, bulk, and solution polymerizations, or combinations of these such as bulk-suspension, emulsion-bulk, and emulsion-suspension polymerizations. It is also possible to prepare the two or more graft copolymers by two or more different polymerization techniques.

The copolymer of styrene and acrylonitrile is preferably prepared in emulsion or suspension, but the other polymerization techniques mentioned above may also be used.

Emulsion polymerization can be performed by the usual techniques, both for the graft copolymers and for the copolymer.

If the polymerization is performed in aqueous emulsion it is necessary to use the customary reagents such as emulsifiers, alkali, salts, soaps, initiators such as peroxides, and chain-length regulators.

Suitable chain-length regulators are organosulphur compounds such as the widely used mercaptans or the dialkyldixanthogens, diaryl sulphides, mercaptothiazoles, tetraalkylthiuram monosulphides and disulphides, etc., singly or in combination, and hydroxyl compounds such as the terpinolenes. The dimer of α-methylstyrene or of an α-alkene with a relatively long chain may also be used.

The chain-length regulators most widely used commercially are above all the mercapto compounds, and of these the hydroxycarbyl mercaptans with 8—20 carbon atoms per molecule are widely used at present. More particularly, preference is given to mercaptans with a tertiary alkyl group.

The quantity of the organosulphur compound can vary within broad limits depending on the chosen mixture, the specific compound, the polymerization temperature, the emulsifier, and other variables relating to the formulation. A good result can be achieved by using 0.01—5 parts by weight (per 100 parts by weight of the monomer) of the organosulphur compound, preference being given to 0.05—2 parts by weight of the organosulphur compound. Suitable organosulphur compounds include n-octylmercaptan, n-dodecylmercaptan, tert.-dodecylmercaptan, tert.-nonylmercaptan, tert.-hexadecylmercaptan, tert.octa-decylmercaptan, tert.eicosylmercaptan, sec.octylmercaptan, sec.tridecylmercaptan, cyclododecyl-mercaptan, cyclododecadienylmercaptan, arylmercaptans such as 1-naphthalenethiol etc., bis(tetramethyl-thiuram disulphide), 2-mercaptobenzathiazole, and the like. Mixtures of these compounds can also be used.

The emulsifier may be selected from a very wide range of compounds such as disproportionated rosin soap, fatty acid soap, mixtures of these compounds, arylsulphonates, alkylarylsulphonates and other surface-active compounds, and mixtures of these compounds. Nonionic emulsifiers such as polyethers and polyols may be used. The quantities of the emulsifiers used depend on the types, reaction parameters, and concentrations of the polymerizable monomers in the emulsion polymerization system.

Suitable donors of free radicals for the emulsion polymerization process are organic or inorganic peroxides, hydroperoxides, azo compounds, and redox initiator systems. These compounds can be added at the start of the polymerization. Alternatively, they may be added partly at the start and partly during the course of the polymerization.

The compounds chosen as initiators are preferably alkali- or ammonium per-salts and/or redox systems. Particular compounds that may be mentioned are potassium persulphate, ammonium persulphate, and sodium persulphate. Examples of suitable redox systems are per-salts (for example perchlorates or persulphates), tert.butylhydroperoxide, cumene hydroperoxide, diisopropylbenzene hydroperoxide and methylcyclohexyl hydroperoxide, in combination with reducing agents based on acids that contain sulphur in a low valency state, such as sodium formaldehydesulphoxylate, bisulphide, and pyrosulphide, or with organic bases such as triethanolamine, or with dextrose, sodium pyrophosphate, and mercaptans, or their combinations, possibly together with metal salts such as ferrous sulphate. These initiators or initiator systems may be added as a single addition, in a number of stages, or even gradually.

The rubber for the preparation of the graft copolymers may in principle be of any type.

However, preference is given to butadiene-based rubbers such as polybutadiene and butadienestyrene rubber. To obtain a polymer composition with a good impact strength it is desirable to use a rubber latex with a weight-average particle size ($d_{50}$, determined with a electron microscope) between 0.05 and 0.70 μm.

In such a case the graft copolymer must therefore be prepared at least partly in emulsion.

The process by which the rubber latex is prepared is preferably controlled in such a way that highly cross-linked products are obtained. The gel content should preferably be greater than 70 wt-% (determined in methyl ethyl ketone or toluene). At high levels of butadiene in the rubber this degree of cross-linking can be obtained by polymerizing to a high degree of conversion or by using cross-linking agents, i.e. polyfunctional monomers, such as divinylbenzene or ethylene glycol dimethacrylate.

If the graft copolymerization is performed by a route that does not involve emulsion polymerization, rubbers that are made from solutions in organic solvents may also be used. In that case, however, it is desirable to perform the graft polymerization reaction for example in the form of a bulk-suspension polymerization.

In cases in which the rubbers are prepared by emulsion polymerization, the same emulsifiers, activators, and polymerization auxiliaries that are used in the preparation of the α-methylstyreneacrylonitrile copolymers can be used. Before the grafting reaction the rubber latex should be degassed to prevent undesirable reactions of unconverted monomer.

Preference if given to polybutadiene homopolymers or to butadiene copolymers with a butadiene content of more than 60 wt-%. If other dienes, such as isoprene, or the lower alkyl esters of acrylic acid are used as comonomers, the butadiene content of the rubber may be lowered to 30 wt-% without any adverse effect on the properties of the polymer composition. In principle, it is also possible to prepare the graft polymers from saturated rubbers, for example ethene-vinyl acetate copolymers with a vinyl acetate content of less than 50% or ethene-propene-diene terpolymers (these dienes are not conjugated; examples are 1,4-hexadiene, ethylidene norbornene, and dicyclopentadiene), or from acrylate rubber, chlorinated polyethene rubber, or chloroprene rubber. Mixtures of two or more rubbers can also be used.

If the copolymer or the graft copolymer is prepared in suspension, the usual additives are used, such as suspension stabilisers, free radical donating substances, chain transfer agents and the like.

The various components of the polymer composition may be mixed in a manner known in the art, depending on the form in which they are available.

If all components are solid, such as powder, beads or granulate they are advantageously blended in an extruder, having one or two screws, optionally with degasification. If two or more components are prepared by the same polymerization technique, for example by emulsion polymerization it can be advantageous to combine these two or more components in an early stage, prior to the recovery of the component from the reaction mixture, and recover the components together.

A further possible method is described in British Patent Specification No. 1,586,910 according to which patent the components are dissolved or suspended in for example chlorobenzene.

From the resulting solution or suspension the polymer composition can be recovered.

According to the invention various combinations of graft copolymers may be used. According to a preferred embodiment 50—95 wt-% of A is combined with 5—50 wt-% of B (with respect to A+B). The rubber content of A is preferably between 20 and 50 wt-%, in which case the rubber content of B is preferably between 10 and 20 wt-%.

In a preferred embodiment of the invention graft copolymer A is prepared by polymerizing 50—70 parts by weight of monomers, on the presence of 50—30 parts by weight of rubber.

In a further preferred embodiment of the invention, optionally in combination with the above preferred embodiment, the rubber content of graft copolymer B is between 15 and 20 wt-%.

The preferred weight ratios between polycarbonate on the one hand and the components A, B and C together, on the other, are between 5 to 95 and 95 to 5, more in particular between 40 to 60 and 75 to 25.

The rubber content of the polymer composition is preferably 5—30 wt-%, and more preferably 10—20 wt-%. A polymer composition with a rubber content between these limits has a good impact strength also at very low temperatures, combined with good processing properties.

The graft copolymers are preferably obtained by polymerizing styrene and acrylonitrile in the presence of a butadiene rubber. It may, however, be advantageous to replace the sytyrene in whole or in part by α-methylstyrene if enhanced heat resistance is required.

If an enhanced heat resistance is required it is also advantageous to use a copolymer of acrylonitrile and α-methylstyrene as copolymer D.

It is possible to combine the replacement of a part of the styrene in a graft copolymer by α-methylstyrene with the replacement of styrene by α-methylstyrene in the copolymer.

Usually and preferably the copolymer of styrene and/or α-methylstyrene and acrylonitrile will be prepared separately from the graft copolymer. It can under certain circumstances, however, be useful to have only the copolymer present that is prepared during the graft polymerization.

The invention will now be illustrated by some examples.

Examples I and II

The graft copolymers A and B were obtained by polymerizing 65 and 84 parts by weight respectively of a mixture of styrene and acrylonitrile in the presence of 35 and 16 parts by weight respectively of butadiene rubber. Two polymer compositions were then prepared from A and B. These compositions contained also a polycarbonate in addition to a quantity of copolymer of styrene and acrylonitrile. They were prepared in a ZSK double-screw extruder. The proportions of the components and the mechanical properties of the compositions are given in the table.

The compositions also contained the conventional additives.

4

# 0 080 767

TABLE 1

|  | | Example | |
|---|---|:---:|:---:|
|  | | I | II |
| **Composition** | | | |
| | ABS—A (parts by weight) | 16 | 10 |
| | ABS—B (parts by weight) | 10 | 5 |
| | Copolymer (parts by weight) | 24 | 15 |
| | Polycarbonate (parts by weight) | 50 | 70 |
| **Properties** | | | |
| | Melt index | 8 | 6 |
| | Impact strength (Izod, J/m) | 457 | 600 |
| | (Charpy notched, $mJ/mm^2$) | 20 | 33 |
| | Flexural strength ($N/mm^2$) | 110 | 103 |
| | E-modulus ($N/mm^2$) | 2500 | 2570 |
| | Vicat (5 kg, °C) | 119 | 131 |

**Examples III and IV**

In these examples the polymer compositions were the same as in Examples I and II, except that the copolymer was replaced by a copolymer of α-methylstyrene and acrylonitrile. The results were comparable to the results given in the table. The only significant difference was that the Vicat softening point was respectively 126 and 136°C.

**Examples V—VII and Comparative Example A**

On the basis of the same components as used according to Example I, three compounds were prepared, having different ABS-PC ratios. The composition and properties of these compounds are given in Table 2. The compounds were prepared using a RSK-twin screw extruder and a melt temperature of about 240°C.

TABLE 2

|  | | Example | | | |
|---|---|:---:|:---:|:---:|:---:|
|  | | V | VI | VII | A |
| **Composition** | | | | | |
| | ABS—A (wt. parts) | 30 | 27 | 27 | 34 |
| | ABS—B (wt. parts) | 10 | 10 | 10 | — |
| | Copolymer (wt. parts) | 15 | 13 | 8 | 16 |
| | Polycarbonate (wt. parts) | 45 | 50 | 55 | 50 |
| | Rubber content (wt.%) | 14 | 12 | 12 | 12 |
| **Properties** | | | | | |
| | Melt index (260°C, 10 kg) | 4.5 | | | |
| | Impact strength (Izod, notched) | 49 | 54 | 65 | 52 |
| | +23°C ($kJ/mm^2$) | 41 | 43 | 55 | 42 |
| | 0°C | 17 | 21 | 25 | 20 |
| Vicat B (5 kg, °C) | | 113 | 113 | 120 | 113 |
| Spiral flow length (cm, 40°C) | | 93,5 | 91,5 | 83,5 | 87,6 |

(flat spiral 3×20 mm, injection pressure 1060 Bar, temperature 260°C).

5

**0 080 767**

**Claims for the Contracting States: BE CH DE FR GB IT LI NL SE**

1. A polymer composition based on a polycarbonate a styrene acrylonitrile copolymer and graft copolymers of a vinyl aromatic compound and an unsaturated nitrile compound on rubber-like polymers, characterized in that the polymer composition contains:

A.  one or more graft copolymers obtained by polymerizing 40—80 parts by weight of a monomer mixture consisting of:
20—40 wt-% of acrylonitrile
60—80 wt-% of styrene, and
0—20 wt-% of one or more other monomers in the presence of 20—60 parts by weight of rubber (with respect to 100 parts by weight of graft copolymer),

B.  one or more graft copolymers obtained by polymerizing 75—90 parts by weight of a monomer mixture consisting of:
20—40 wt-% of acrylonitrile
60—80 wt-% of styrene and
0—20 wt-% of one or more other monomers in the presence of 10—25 parts by weight of rubber (with respect to 100 parts by weight of graft copolymer),

C.  a copolymer of styrene and acrylonitrile obtained by polymerizing 60—80 parts by weight of styrene and 20—40 parts by weight of acrylonitrile, and

D.  one or more polycarbonates, the rubber content of the polymer composition being between 5 and 30 wt-% and the difference between the rubber contents of the graft copolymers being at least 5 wt-%.

2. Polymer composition in accordance with Claim 1, characterized in that the composition consists of:
a. 5—95 wt-% of polycarbonate and
b. 5—95 wt-% of the components A, B, and C.

3. Polymer composition in accordance with Claim 2, characterized in that the polymer composition consists of:
a. 40—75 wt-% of polycarbonate and
b. 25—60 wt-% of the components A, B, and C.

4. Polymer composition in accordance with any of Claims 1—3, characterized in that the composition contains a polycarbonate based on a non-halogenated dihydroxydiarylalkane.

5. Article prepared in whole or in part from a polymer composition according to one of the claims 1—5.

**Claims for the Contracting State: AT**

1. Process for the preparation of a polymer composition based on a polycarbonate a styrene acrylonitrile copolymer and graft copolymers of a vinyl aromatic compound and an unsaturated nitrile compound on rubber-like polymers, characterized in that the polymer composition is prepared by mixing

A.  one or more graft copolymers obtained by polymerizing 40—80 parts by weight of a monomer mixture consisting of:
20—40 wt-% of acrylonitrile
60—80 wt-% of styrene, and
0—20 wt-% of one or more other monomers in the presence of 20—60 parts by weight of rubber (with respect to 100 parts by weight of graft copolymer),

B.  one or more graft copolymers obtained by polymerizing 75—90 parts by weight of a monomer mixture consisting of:
20—40 wt-% of acrylonitrile
60—80 wt-% of styrene and
0—20 wt-% of one or more other monomers in the presence of 10—25 parts by weight of rubber (with respect to 100 parts by weight of graft copolymer),

C.  a copolymer of styrene and acrylonitrile obtained by polymerizing 60—80 parts by weight of styrene and 20—40 parts by weight of acrylonitrile, and

D.  one or more polycarbonates, the rubber content of the polymer composition being between 5 and 30 wt-% and the difference between the rubber contents of the graft copolymers being at least 5 wt-%.

2. Process in accordance with Claim 1, characterized in that the composition is prepared from:
a. 5—95 wt-% of polycarbonate and
b. 5—95 wt-% of the components A, B, and C.

6

3. Process in accordance with Claim 2, characterized in that the polymer composition is prepared from:
a. 40—75 wt-% of polycarbonate and
b. 25—60 wt-% of the components A, B, and C.
4. Process in accordance with any of Claims 1—3, characterized in that the composition is prepared using a polycarbonate based on a non-halogenated dihydroxydiarylalkane.
5. Article prepared in whole or in part from a polymer composition prepared according to one of the claims 1—5.

**Patentansprüche für die Vertragsstaaten: BE—CH—LI—DE—FR—GB—IT—NL—SE**

1. Polymerzusammensetzung auf der Basis eines Polycarbonates, eines Styrol-Acrylnitril-copolymeren und von Propfcopolymeren einer vinylaromatischen Verbindung und einer ungesättigten Nitrilverbindung auf kautschukartigen Polymeren, dadurch gekennzeichnet, daß die Polymerzusammensetzung hergestellt wird durch Vermischen von:

A. einem oder mehreren Propfcopolymeren, hergestellt durch Polymerisieren von 40 bis 80 Gew.-Teilen eines Monomerengemisches, bestehend aus:
20—40 Gew.-% Acrylnitril
60—80 Gew.-% Styrol, und
0—20 Gew.-% eines oder mehrerer anderer Monomer in Gegenwart von 20 bis 60 Gew.-Teilen Kautschuk (bezogen auf 100 Gew.-Teile des Pfropfcopolymeren),

B. einem oder mehreren Propfcopolymeren, erhalten durch Polymerisieren von 75 bis 90 Gew.-Teilen eines Monomerengemisches, bestehend aus:
20—40 Gew.-% Acrylnitril
60—80 Gew.-% Styrol und
0—20 Gew.-% eines oder mehrerer anderer Monomere in Gegenwart von 10 bis 25 Gew.-Teilen Kautschuk (bezogen auf 100 Gew.-Teile des Pfropfcopolymeren),

C. einem Copolymeren aus Styrol und Acrylnitril, erhalten durch Polymerisieren von 60 bis 80 Gew.-Teilen Styrol und 20 bis 40 Gew.-Teilen Acrylnitril, und

D. einem oder mehreren Polycarbonate, wobei der Kautschukgehalt der Polymerzusammensetzung zwischen 5 und 30 Gew.-% und der Unterschied zwischen dem Kautschukgehalt der Propfcopolymeren wenigstens 5 Gew.-% beträgt.

2. Polymerzusammensetzung nach Anspruch 1, dadurch gekennzeichnet, daß die Zusammensetzung hergestellt wird aus:
a. 5—95 Gew.-% Polycarbonat und
b. 5—95 Gew.-% der Komponenten A, B und C.
3. Polymerzusammensetzung nach Anspruch 2, dadurch gekennzeichnet daß die Polymerzusammensetzung hergestellt wird aus:
a. 40—75 Gew.-% Polycarbonat und
b. 25—60 Gew.-% der Komponenten A, B und C.
4. Polymerzusammensetzung nach einem der Ansprüche 1—3, dadurch gekennzeichnet, dass die Zusammensetzung unter Verwendung eines Polycarbonates auf der Basis eines unhalogenierten Dihydroxydiarylalkans hergestellt wird.
5. Gegenstand, ganz oder zum Teil hergestellt aus einer Polymerzusammensetzung nach einem der Ansprüche 1 bis 4.

**Patentansprüche für den Vertragsstaat: AT**

1. Verfahren zur Herstellung einer Polymerzusammensetzung auf der Basis eines Polycarbonates, eines Styrol-Acrylnitril-copolymeren und von Propfcopolymeren einer vinylaromatischen Verbindung und einer ungesättigten Nitrilverbindung auf kautschukartigen Polymeren, dadurch gekennzeichnet, daß die Polymerzusammensetzung hergestellt wird durch Vermischen von:

A. einem oder mehreren Propfcopolymeren, hergestellt durch Polymerisieren von 40 bis 80 Gew.-Teilen eines Monomerengemisches, bestehend aus:
20—40 Gew.-% Acrylnitril
60—80 Gew.-% Styrol, und
0—20 Gew.-% eines oder mehrerer anderer Monomere in Gegenwart von 20 bis 60 Gew.-Teilen Kautschuk (bezogen auf 100 Gew.-Teile des Pfropfcopolymeren),

B. einem oder mehreren Propfcopolymeren, erhalten durch Polymerisieren von 75 bis 90 Gew.-Teilen eines Monomerengemisches, bestehend aus:

20—40 Gew.-% Acrylnitril
60—80 Gew.-% Styrol und
0—20 Gew.-% eines oder mehrerer anderer Monomere in Gegenwart von 10 bis 25 Gew.-Teile Kautschuk (bezogen auf 100 Gew.-Teile des Pfropfcopolymeren),

C.   einem Copolymeren aus Styrol und Acrylnitril, erhalten durch Polymerisieren von 60 bis 80 Gew.-Teilen Styrol und 20 bis 40 Gew.-Teilen Acrylnitril, und

D.   einem oder mehreren Polycarbonaten, wobei der Kautschukgehalt der Polymerzusammensetzung zwischen 5 und 30 Gew.-% und der Unterschied zwischen dem Kautschukgehalt der Propfcopolymeren wenigstens 5 Gew.-% beträgt.

2. Verfahren nach Anspruch 1, dadurch gekennzeichnet, daß die Zusammensetzung hergestellt wird aus:
a. 5—95 Gew.-% Polycarbonat und
b. 5—95 Gew.-% der Komponenten A, B und C.
3. Verfahren nach Anspruch 2, dadurch gekennzeichnet, daß die Polymerzusammensetzung hergestellt wird aus:
a. 40—75 Gew.-% Polycarbonat und
b. 25—60 Gew-% der Komponenten A, B und C.
4. Verfahren nach einem der Ansprüche 1 bis 3, dadurch gekennzeichnet, daß die Zusammensetzung unter Verwendung eines Polycarbonates auf der Basis eines unhalogenierten Dihydroxydiarylalkans hergestellt wird.
5. Gegenstand, ganz oder zum Teil hergestellt aus einer Polymerzusammensetzung nach einem der Ansprüche 1 bis 4.

**Revendications pour les Etats Contractants: BE CH DE FR GB IT LI NL SE**

1. Composition de polymères à base d'un polycarbonate, d'un copolymère styrène-acrylonitrile et de copolymères greffés d'un composé vinylaromatique et d'un composé nitrile insaturé sur des polymères de type caoutchouc, caractérisée en ce que la composition de polymères contient:

A.   un ou plusieurs copolymères greffés obtenus par polymérisation de 40—80 parties en poids d'un mélange de monomères constitué par:
20—40% en poids d'acrylonitrile
60—80% en poids de styrène et
0—20% en poids d'un ou plusieurs autres monomères, en présence de 20—60 parties en poids de caoutchouc (par rapport à 100 parties en poids de copolymère greffé),

B.   un ou plusieurs copolymères greffés obtenus par polymérisation de 75—90 parties en poids d'un mélange de monomères constitué par:
20—40% en poids d'acrylonitrile
60—80% en poids de styrène et
0—20% en poids d'un ou plusieurs autres monomères, en présence de 10—25 parties en poids de caoutchouc (par rapport à 100 parties en poids de copolymère greffé),

C.   un copolymère de styrène et d'acrylonitrile obtenu par polymérisation de 60—80 parties en poids de styrène et de 20—40 parties en poids d'acrylonitrile, et

D.   un ou plusieurs polycarbonates, la teneur en caoutchouc de la composition de polymères étant comprise entre 5 et 30% en poids et la différence entre les teneurs en caoutchouc des copolymères greffés étant d'au moins 5% en poids.

2. Composition de polymères selon la revendication 1, caractérisée en ce que la composition est constituée de:
a. 5—95% en poids de polycarbonate et
b. 5—95% en poids des constituants A, B et C.
3. Composition de polymères selon la revendication 2, caractérisée en ce que la composition de polymères est constituée de:
a. 40—75% en poids de polycarbonate et
b. 25—60% en poids des constituants A, B et C.
4. Composition de polymères selon l'une quelconque des revendications 1—3, caractérisée en ce que la composition contient un polycarbonate à base d'un dihydroxydiarylalcane non halogéné.
5. Produit préparé en totalité ou en partie à partir d'une composition de polymères selon l'une quelconque des revendications 1—4.

**0 080 767**

Revendications pour l'Etat Contractant: AT

1. Procédé pour la préparation d'une composition de polymères à base d'un polycarbonate, d'un copolymère styrène-acrylonitrile et de copolymères greffés d'un composé vinylaromatique et d'un composé nitrile insaturé sur des polymères de type caoutchouc, caractérisé en ce que la composition de polymères est préparée en mélangeant:

A. un ou plusieurs copolymères greffés obtenus par polymérisation de 40—80 parties en poids d'un mélange de monomères constitué par:
20—40% en poids d'acrylonitrile
60—80% en poids de styrène et
0—20% en poids d'un ou plusieurs autres monomères, en présence de 20—60 parties en poids de caoutchouc (par rapport à 100 parties en poids de copolymère greffé),

B. un ou plusieurs copolymères greffés obtenus par polymérisation de 75—90 parties en poids d'un mélange de monomères constitué par:
20—40% en poids d'acrylonitrile
60—80% en poids de styrène et
0—20% en poids d'un ou plusieurs autres monomères, en présence de 10—25 parties en poids de caoutchouc (par rapport à 100 parties en poids de copolymère greffé),

C. un copolymère de styrène et d'acrylonitrile obtenu par polymérisation de 60—80 parties en poids de styrène et de 20—40 parties en poids d'acrylonitrile, et

D. un ou plusieurs polycarbonates, la teneur en caoutchouc de la composition de polymères étant comprise entre 5 et 30% en poids et la différence entre les teneurs en caoutchouc des copolymères greffés étant d'au moins 5% en poids.

2. Procédé selon la revendication 1, caractérisé en ce que la composition est préparée à partir de:
a. 5—95% en poids de polycarbonate et
b. 5—95% en poids des constituants A, B et C.

3. Procédé selon la revendication 2, caractérisé en ce que la composition de polymères est préparée à partir de:
a. 40—75% en poids de polycarbonate et
b. 25—60% en poids des constituants A, B et C.

4. Procédé selon l'une quelconque des revendications 1—3, caractérisé en ce que la composition est préparée en utilisant un polycarbonate à base d'un dihydroxydiarylalcane non halogéné.

5. Produit préparé en totalité ou en partie à partir d'une composition de polymères préparée selon l'une quelconque des revendications 1—4.